# EUROPÄISCHE PATENTSCHRIFT

(11) **EP 0 644 347 B1**
(45) Veröffentlichungstag und Bekanntmachung des Hinweises auf die Patenterteilung: **06.11.1996**
(21) Anmeldenummer: 94112843.1
(22) Anmeldetag: 17.08.1994
(51) Int. Cl.: F16D 3/02

(54) **Ausgleichskupplung**
Compensation clutch
Accouplement de compensation

(30) Priorität: 17.09.1993 DE 4331699
(43) Veröffentlichungstag der Anmeldung: 22.03.1995
(73) Patentinhaber: EMIL LIHOTZKY Maschinenfabrik, D-94447 Plattling (DE)
(72) Erfinder: Czarnetzki, Robert Gregor, Dipl.-Ing., D-94469 Deggendorf (DE)
(74) Vertreter: Weber, Otto Ernst, Dipl.-Phys.

(56) Entgegenhaltungen:
- EP-A- 0 164 792
- DE-A- 2 700 283
- FR-A- 2 089 579

## Beschreibung

Die Erfindung betrifft eine Ausgleichskupplung gemäß dem Oberbegriff des Anspruchs 1.

Eine derartige Ausgleichskupplung ist, z.B. aus Dokument EP-A-0 164 792 bekannt.

Es ist häufig erforderlich, in einem sich drehenden mechanischen Antriebsstrang, beispielsweise zwischen einem Motor und einem Getriebe, geringfügige Fluchtungsfehler auszugleichen. Hierfür werden beispielsweise Ausgleichswellen mit zwei Ausgleichskupplungen verwendet. Die Baulänge der Ausgleichskupplungen gestattet es häufig nicht, einen Winkelausgleich oder Versatzausgleich zweier Wellen durchzuführen, wenn nur ein kurzer Axialabstand zwischen beiden Wellen zur Verfügung steht.

Der Erfindung liegt die **Aufgabe** zugrunde, eine gattungsgemäße Ausgleichskupplung zu schaffen, mit der auch bei sehr kurzem Axialabstand zweier nicht genau fluchtender Wellen mit Hilfe einer Ausgleichswelle ein Ausgleich der Fluchtungsfehler geschaffen werden kann.

Diese Aufgabe wird gemäß dem kennzeichnenden Teil des Patentanspruchs 1 dadurch gelöst, daß das erste Kupplungselement an einer Stirnseite mit einer axialen Bohrung versehen ist, die sich zu dieser Stirnseite hin öffnet, daß innerhalb der axialen Bohrung ein aus der Bohrungswandung radial einwärts vorspringender ringförmiger Umfangsvorsprung vorgesehen ist, dessen Innendurchmesser geringer ist als der Durchmesser der axialen Bohrung, daß das zweite Kupplungselement einen im wesentlichen zylindrischen, zapfenartigen Endabschnitt aufweist, dessen Außendurchmesser gleich oder geringfügig kleiner ist als der Innendurchmesser des ringförmigen Umfangsvorsprungs, daß der zapfenartige Endabschnitt des zweiten Kupplungselementes in die axiale Bohrung des ersten Kupplungselementes eingreift, daß zwischen dem ersten Kupplungselement und dem zweiten Kupplungselement ein Mitnehmerelement vorgesehen ist, daß das erste Kupplungselement im Bereich der axialen Bohrung mit einem radialen Querschlitz versehen ist und daß das Mitnehmerelement als Mitnehmerstift ausgebildet ist, der die radiale Querbohrung und den Querschlitz durchgreift.

Ein Vorteil des Mitnehmerelementes ist darin zu sehen, daß der radiale Querschlitz des zweiten Kupplungselementes sowohl eine Neigung des zweiten Kupplungselementes als auch eine geringfügige Axialverschiebung des zweiten Kupplungselementes gegenüber dem ersten Kupplungselement zuläßt. Besonders vorteilhaft ist dabei die Möglichkeit, das zweite Kupplungselement leicht zu verschwenken.

Durch die Lagerung des zapfenartigen Endabschnitts des zweiten Kupplungselementes auf dem ringförmigen Umfangsvorsprung in der axialen Bohrung des ersten Kupplungselementes ist es dem zweiten Kupplungselement möglich, geringfügige Winkelauslenkungen gegenüber dem ersten Kupplungselement hinzunehmen, ohne sich in der axialen Bohrung des ersten Elementes zu verklemmen. Die Drehmomentübertragung erfolgt dabei durch das zwischen beiden Kupplungselementen vorgesehene Mitnehmerelement. Durch die Anordnung der gelenkigen Lagerung innerhalb der axialen Bohrung des ersten Kupplungselementes ist ein kompakter Aufbau der Ausgleichskupplung gewährleistet.

Durch einen trapezförmigen Querschnitt oder durch eine konvex gekrümmte Innenfläche des ringförmigen Umfangsvorsprungs kann das zweite Kupplungselement besonders leicht und präzise geschwenkt werden.

Eine Fase am Querschlitz im Bereich der Stirnseite erleichtert das Einführen des zweiten Kupplungselementes in die axiale Ausnehmung des mit dem Mitnehmerstift versehenen ersten Kupplungselementes. Noch weiter vereinfacht wird dieses Einführen dadurch, daß durch den zentralen Axialvorsprung der angefaste Bereich größer wird. Die spezielle Ausgestaltung des Mitnehmerstiftes, daß der Mitnehmerstift in seinem Mittelbereich auf voneinander abgewandten Seiten mit jeweils einer Abplattung versehen ist, daß jede Abplattung an ihren axialen Enden jeweils unter Ausbildung einer Kippfläche in den nicht abgeplatteten endseitigen Bereich vollen Durchmessers übergeht, wobei die Kippflächen eine gemeinsame Mittelebene aufweisen, in welcher die Stiftachse liegt, daß der Axialabstand zweier zugeordneter Kippflächen im wesentlichen dem Außendurchmesser des zapfenartigen Endabschnitts entspricht oder geringfügig größer als dieser ist und daß die Breite des Mitnehmerstiftes im Bereich der Abplattungen im wesentlichen der lichten Weite des Querschlitzes im zweiten Kupplungselement entspricht oder geringfügig kleiner ist, führt zu dem Vorteil, daß das zweite Kupplungselement sowohl um die Achse des Mitnehmerstiftes als auch um eine rechtwinklig zu dieser Achse stehende Kippachse leichter geschwenkt werden kann.

Ein Dichtungselement im Mündungsbereich der axialen Bohrung schützt einerseits die Ausgleichskupplung vor Verschmutzung und gestattet andererseits eine Schmierung der Ausgleichskupplung, ohne daß Schmiermittel aus der axialen Bohrung austritt, was wiederum einen Einbau in eine geschlossene Einheit gestattet, nicht zuletzt aufgrund des wesentlich geringeren Querschnitts im Bezug auf die Baulänge und im Vergleich mit bekannten Ausgleichswellen.

Eine Ausgleichswelle mit zumindest einer erfindungsgemäßen Ausgleichskupplung und insbesondere mit zwei Ausgleichskupplungen ermöglicht es, auch bei kurzem Axialabstand zwischen zwei nicht genau fluchtenden oder winkelversetzten Wellen Winkel-, Längs- und Querverlagerungen auszugleichen. Dadurch wird beispielsweise die Bildung einer kompakten Motor-Getriebe-Verbindung geschaffen, ohne daß die Antriebsachse des Motors und die Eingangsachse des Getriebes exakt zueinander ausgerichtet sein müssen und ohne daß ein großer Abstand zwischen Motor und Getriebe vorgesehen sein muß. Beispielsweise können bei einer derartigen Anordnung die zapfenartigen Endabschnitte der jeweiligen zweiten Kupplungselemente die Endabschnitte der Motorwelle und der Getriebewelle sein, während die ersten Kupplungselemente beide im Mittelstück der Ausgleichswelle liegen.

Die Erfindung wird nachfolgend anhand eines Beispiels unter Bezugnahme auf die Zeichnung beschrieben; in dieser zeigen:
- Fig. 1: Eine teilweise geschnittene Seitenansicht einer Ausgleichswelle,
- Fig. 2: eine teilweise geschnittene Draufsicht auf ein erstes Kupplungselement,
- Fig. 3: einen Schnitt entlang der Linie B-B in der Figur 1,
- Fig. 4: eine Seitenansicht eines Mitnehmerstiftes,
- Fig. 5: einen Querschnitt durch einen Mitnehmerstift entlang der Linie A-A in der Figur 4,
- Fig. 6: einen Längsschnitt durch ein zweites Kupplungselement,
- Fig. 7: eine Draufsicht auf ein zweites Kupplungselement,
- Fig. 8: eine Frontansicht eines zweiten Kupplungselementes in Richtung des Pfeiles C in der Figur 6, und
- Fig. 9: eine zwischen zwei Getriebe eingesetzte Ausgleichswelle.

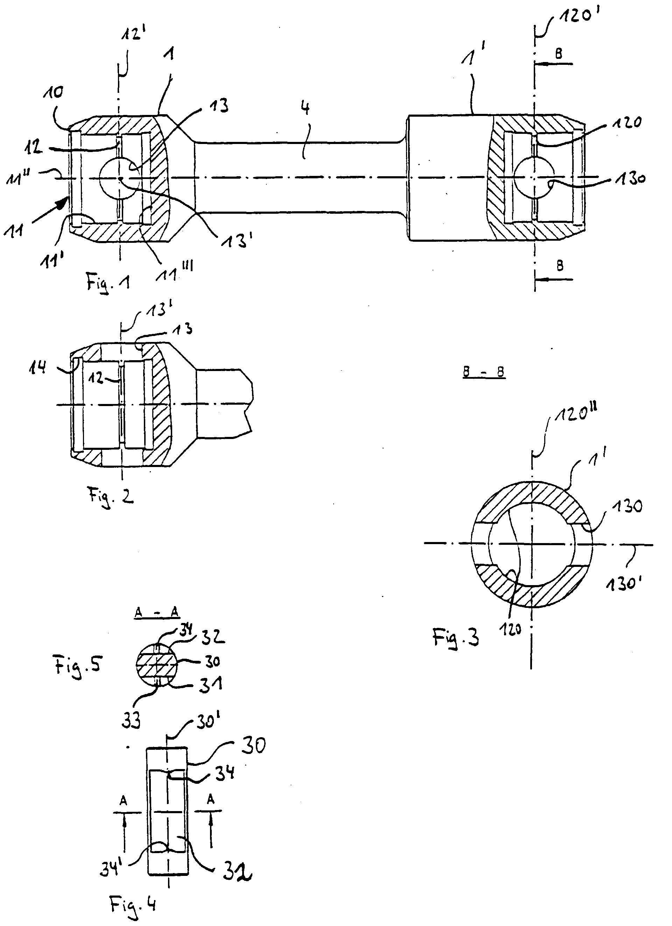

In der Figur 1 ist ein Mittelstück 4 einer Ausgleichswelle gezeigt, welches an seinen beiden Enden jeweils mit einem ersten Kupplungselement 1,1' einer Ausgleichskupplung versehen ist. Das erste Kupplungselement 1' ist dabei entsprechend dem Kupplungselement 1 aufgebaut, so daß im folgenden Text nur das erste Kupplungselement 1 beschrieben wird.

Das erste Kupplungselement 1 weist an einer axialen Stirnseite 10 eine axiale Bohrung 11 auf, die sich zu dieser Stirnseite 10 hin öffnet. Innerhalb der axialen Bohrung 11 ist ein ringförmiger Umfangsvorsprung 12 vorgesehen, der aus der Innenumfangswandung 11' der axialen Bohrung 11 vorspringt. Die Mittelebene 12' des ringförmigen Umfangsvorsprungs 12 liegt dabei rechtwinklig zur Bohrungsachse 11'' der axialen Bohrung 11.

Der ringförmige Umfangsvorsprung 12 hat sowohl zur Stirnseite 10 als auch zur Grundfläche 11''' der sacklochartig ausgebildeten axialen Bohrung 11 einen Abstand.

Eine radiale Querbohrung 13 durchdringt das erste Kupplungselement derart, daß die Achse 13' der radialen Querbohrung 13 in der Mittelebene 12' des Umfangsvorsprungs 12 liegt (Fig. 2). Im Mündungsbereich der axialen Bohrung 11 ist eine Ringnut 14 vorgesehen, die zur Aufnahme eines Dichtungselementes, beispielsweise eines O-Rings, dient.

Die Darstellung in der Fig. 3 zeigt einen Querschnitt entlang der Linie B-B in der Fig. 1 durch das erste Kupplungselement 1' im Bereich der Mittelebene 120' des ringförmigen Umfangsvorsprungs 120, welcher durch die Querbohrung 130 unterbrochen ist.

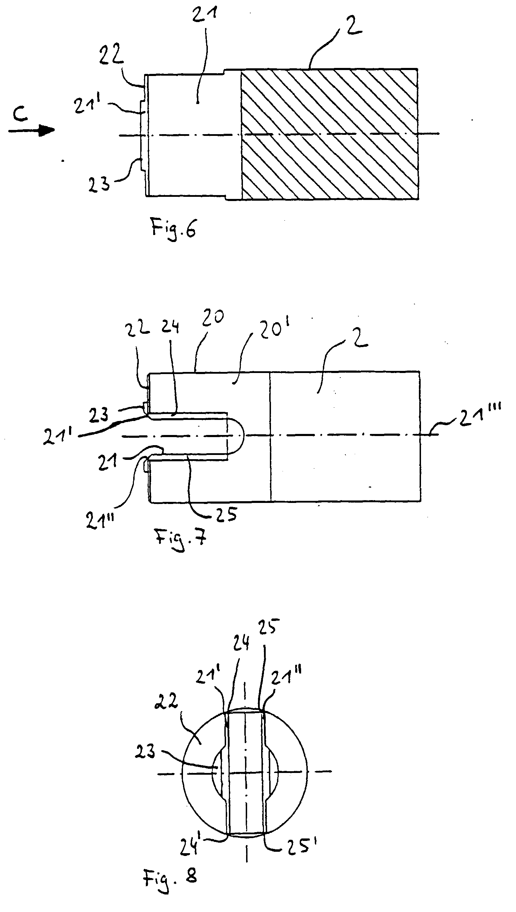

In der Fig. 4 ist ein Mitnehmerstift 30 dargestellt, der in die Querbohrung 13 paßt. Der Mitnehmerstift 30 ist in seinem Mittelbereich auf voneinander abgewandten Seiten jeweils mit einer Abplattung 31, 32 versehen (Fig. 5). Jede Abplattung 31, 32 geht an ihren axialen Enden jeweils unter Ausbildung einer Kippfläche 33, 33', 34, 34' in einen nicht abgeplatteten endseitigen Bereich vollen Durchmessers über. Die Kippflächen besitzen eine gemeinsame Mittelebene, in welcher die Stiftachse 30' liegt.

In der Fig. 6 ist ein Längsschnitt durch ein zweites Kupplungselement 2 gezeigt, welches einen im wesentlichen zylindrischen zapfenartigen Endabschnitt 20 (Fig. 7) aufweist. Der zapfenartige Endabschnitt 20 ist mit einem radialen Querschlitz 21 versehen, der sich zur Stirnseite 22 hin öffnet. Die Breite dieses Querschlitzes 21 entspricht im wesentlichen der Breite des abgeplatteten Bereiches des Mitnehmerstiftes 30, d.h. des radialen Abstandes zwischen den Abplattungen 31 und 32, so daß der Mitnehmerstift mit seinem abgeplatteten Bereich in den Querschlitz 21 eingeschoben werden kann.

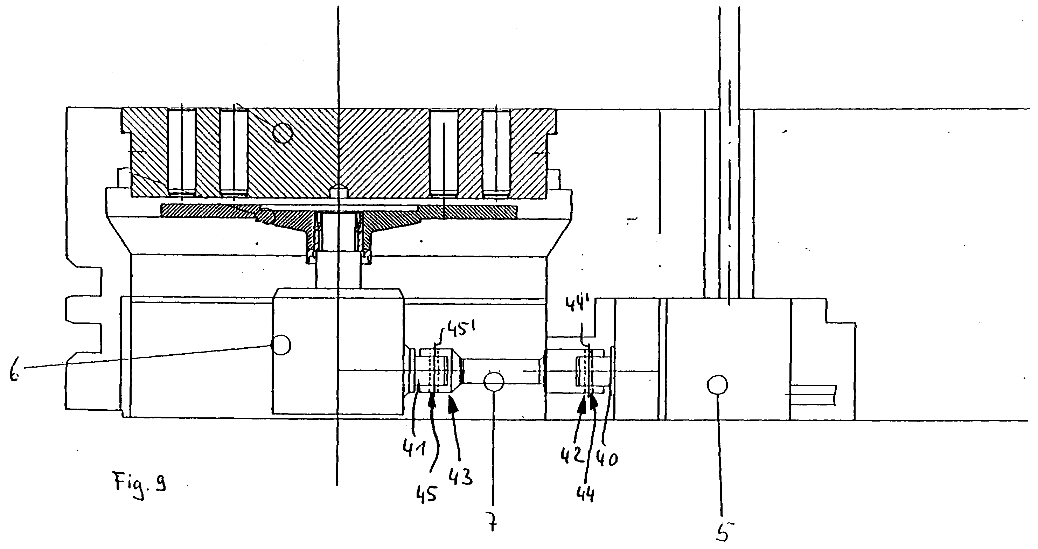

Der zapfenartige Endabschnitt 20 ist an seiner Stirnseite 22 mit einem zentralen Axialvorsprung 23 versehen, der in Axialrichtung über die Stirnseite 22 geringfügig vorsteht. Im Bereich der Mündung des Querschlitzes 21 ist dieser am Übergang zur Stirnseite 22 und zum Axialvorsprung 23 mit jeweils einer Fase 21', 21'' versehen (Fig. 8). Diese Fase erleichtert das Einführen des Mitnehmerstiftes 30 in den Querschlitz 21.

Am Übergang zur Umfangsfläche 20' des zapfenartigen Endabschnitts 20 in den Querschlitz ist jeweils ein abgeplatteter Bereich 24, 24', 25, 25' vorgesehen, der in einer Ebene rechtwinklig zur Mittelebene 21''' des Querschlitzes liegt. Die abgeplatteten Bereiche 24, 24' 25, 25' wirken mit den Kippflächen 33, 33', 34, 34' des Mitnehmerstiftes 30 zusammen. Somit entspricht der Abstand zwischen zwei zusammengehörigen abgeplatteten Bereichen 24, 24' bzw. 25, 25' im wesentlichen dem Axialabstand zwischen zwei Kippflächen 33, 33' bzw. 34, 34' oder ist etwas geringer als der Axialabstand zwischen zwei Kippflächen.

In der Fig. 9 ist zwischen einem ersten Getriebe 5 und einem zweiten Getriebe 6 eine Ausgleichswelle 7 gezeigt. Die Ausgleichswelle 7 verbindet die Ausgangswelle 40 des ersten Getriebes mit der Eingangswelle 41 des zweiten Getriebes. Die Ausgleichswelle 7 ist an jedem axialen Ende mit einer Ausgleichskupplung 42, 43 versehen. Sowohl die Ausgleichskupplung 42 als auch die Ausgleichskupplung 43 bestehen aus einem in den Fig. 1 bis 3 gezeigten ersten Kupplungselement sowie einem in den Fig. 6 bis 8 gezeigten zweiten Kupplungselement. Das zweite Kupplungselement 2 mit seinem zapfenartigen Endabschnitt 20 ist in die axiale Bohrung 11 des ersten Kupplungselementes 1 eingesetzt. Der Mitnehmerstift 30 durchgreift die Bohrung 13 des ersten Kupplungselementes 1 sowie den Querschlitz 21 des zweiten Kupplungselementes 2. Die Außenumfangsfläche 20' des zylindrischen Abschnitts 20 stützt sich dabei gegen die radiale Innenfläche des ringförmigen Umfangsvorsprungs 12 ab und kann durch Drehung um die Achse 30' des Mitnehmerstiftes 30 (welche im montierten Zustand mit der Achse 13' der radialen Querbohrung 13 identisch ist) über den ringförmigen Umfangsvorsprung 12 kippen. Weiterhin kann der zapfenartige Endabschnitt des Kupplungselementes 2 um eine Querachse des Mitnehmerstiftes 30 (im Bereich der Achse 120' in der Figur 3 schwenken, wobei die abgeplatteten Bereiche 24, 24', 25, 25' über die Kippflächen 33, 33', 34, 34' kippen. Auf diese Weise sind das erste Kupplungselement 1 und das zweite Kupplungselement 2 durch den Mitnehmerstift 30 miteinander gekuppelt und um zwei zueinander rechtwinklig gelegene Achsen schwenkbar. Diese Ausgestaltung gestattet es, die jeder Ausgleichskupplung zugeordneten Mitnehmerstifte 44, 45 so anzuordnen, daß ihre Achsen 44', 45' auch parallel gerichtet sein können.

## Patentansprüche

1. Ausgleichskupplung mit einem ersten Kupplungselement (1) und einem zweiten Kupplungselement (2), die formschlüssig und drehfest miteinander verbunden sind, wobei das erste Kupplungselement (1) an einer Stirnseite (10) mit einer axialen Bohrung (11) versehen ist, die sich zu dieser Stirnseite (10) hin öffnet und im Bereich der axialen Bohrung (11) eine radiale Querbohrung (13) aufweist und wobei das zweite Kupplungselement (2) einen im wesentlichen zylindrischen, zapfenartigen Endabschnitt (20) aufweist, der in die axiale Bohrung (11) des ersten Kupplungselements (1) eingreift und weiterhin zwischen dem ersten Kupplungselement (1) und dem zweiten Kupplungselement (2) ein als Mitnehmerstift (30) ausgebildetes Mitnehmerelement (3) vorgesehen ist, welcher die radiale Querbohrung (13) und einen im zapfenartigen Endabschnitt (20) des zweiten Kupplungselement (2) vorgesehenen radialen Querschlitz (21) durchgreift,
**dadurch gekennzeichnet,**
daß innerhalb der axialen Bohrung (11) ein aus der Bohrungswandung (11') radial einwärts vorspringender ringförmiger Umfangsvorsprung (12) vorgesehen ist, dessen Innendurchmesser geringer ist als der Innendurchmesser der axialen Bohrung (11) und
daß der Außendurchmesser des im wesentlichen zylindrischen zapfenartigen Endabschnitts (20) des zweiten Kupplungselements (2) gleich oder geringfügig kleiner ist als der Innendurchmesser des ringförmigen Umfangsvorsprungs (12).

2. Ausgleichskupplung nach Anspruch 1,
dadurch **gekennzeichnet**,
daß der ringförmige Umfangsvorsprung (12) einen rechteckigen Querschnitt aufweist.

3. Ausgleichskupplung nach Anspruch 1,
dadurch **gekennzeichnet**,
daß der ringförmige Umfangsvorsprung (12) einen trapezförmigen Querschnitt mit sich radial einwärts verjüngender Breite aufweist.

4. Ausgleichskupplung nach einem der Ansprüche 1 - 3,
dadurch **gekennzeichnet**,
daß der ringförmige Umfangsvorsprung (12) eine radial einwärts konvex gekrümmte Innenfläche aufweist.

5. Ausgleichskupplung nach Anspruch 4,
dadurch **gekennzeichnet**,
daß die Achse (13') der radialen Querbohrung (13) des ersten Kupplungselementes (1) in der Mittelebene des ringförmigen Umfangsvorsprungs (12) liegt.

6. Ausgleichskupplung nach Anspruch 5,
dadurch **gekennzeichnet**,
daß der Querschlitz (21) an der Stirnseite mit einer Fase (21, 21'') versehen ist.

7. Ausgleichskupplung nach Anspruch 6,
dadurch **gekennzeichnet**,
daß der zapfenartige Endabschnitt (20) an seiner Stirnseite (22) mit einem zentralen, ebenfalls im Bereich des Querschlitzes (21) angefasten Axialvorsprung (23) versehen ist.

8. Ausgleichskupplung nach Anspruch 6 oder 7,
dadurch **gekennzeichnet**,
daß der Querschlitz am Übergang zur Umfangsfläche (20') des zapfenartigen Endabschnitts (20) abgeplattete Bereiche (24, 24'; 25, 25') aufweist.

9. Ausgleichskupplung nach einem der vorhergehenden Ansprüche,
dadurch **gekennzeichnet**,
daß der Mitnehmerstift (30) in seinem Mittelbereich auf voneinander abgewandten Seiten mit jeweils einer Abplattung (31,32) versehen ist,
daß jede Abplattung (31, 32) an ihren axialen Enden jeweils unter Ausbildung einer Kippfläche (33, 33'; 34, 34') in den nicht abgeplatteten endseitigen Bereich vollen Durchmessers übergeht, wobei die Kippflächen (33, 33'; 34, 34') eine gemeinsame Mittelebene aufweisen, in welcher die Stiftachse liegt,
daß der Axialabstand zweier zugeordneter Kippflächen (33, 33'; 34, 34') im wesentlichen dem Außendurchmesser des zapfenartigen Endabschnitts (20) entspricht oder geringfügig größer als dieser ist und
daß die Breite des Mitnehmerstiftes (30) im Bereich der Abplattungen (31, 32) im wesentlichen der lichten Weite des Querschlitzes (21) im zweiten Kupplungselement (2) entspricht oder geringfügig kleiner ist.

10. Ausgleichskupplung nach Anspruch 9,
dadurch **gekennzeichnet**,
daß im montierten Zustand der Ausgleichskupplung die gemeinsame Mittelebene der Kippflächen (33, 33'; 34, 34') mit der Mittelebene des ringförmigen Umfangsvorsprungs (12) im wesentlichen übereinstimmt.

11. Ausgleichskupplung nach einem der vorhergehenden Ansprüche,
dadurch **gekennzeichnet,**
daß im Mündungsbereich der axialen Bohrung (11) eine Ringnut (14) vorgesehen ist, in welche als Dichtungselement ein O-Ring eingesetzt ist.

12. Ausgleichskupplung mit einer Ausgleichswelle zum Ausgleich paralleler und/oder winkliger Verlagerungen von zwei miteinander gekuppelten Wellen (40, 41), wobei die Ausgleichswelle zwischen den beiden gekuppelten Wellen (40, 41) angeordnet ist,
dadurch **gekennzeichnet,**
daß an den Enden der Ausgleichswelle (7) jeweils eine Ausgleichskupplung entsprechend einem der Ansprüche 1 bis 11 angeordnet ist.

13. Ausgleichskupplung nach Anspruch 12,
dadurch **gekennzeichnet,**
daß die Achsen (44', 45') der jeder Ausgleichskupplung zugeordneten Mitnehmerstifte (44, 45) im wesentlichen zueinander parallel gerichtet sind.

## Claims

1. Compensating coupling with a first coupling element (1) and a second coupling element (2), which are positively interconnected in non-rotary manner, the first coupling element (1) being provided on one front face (10) with an axial bore (11), which opens to said front face (10) and has in the vicinity of the axial bore (11) a radial transverse bore (13) and in which the second coupling element (2) has a substantially cylindrical, cone-like end portion (20), which engages in the axial bore (11) of the first coupling element (1) and between the first coupling element (1) and the second coupling element (2) is provided a driving element (3) constructed as a driving pin (30) and which traverses the radial transverse bore (13) and a radial transverse slit (21) provided in the cone-like end portion (20) of the second coupling element (2), characterized in that within the axial bore (11) is provided a circular circumferential projection (12) projecting radially inwards out of the bore wall (11') and whose internal diameter is smaller than the internal diameter of the axial bore (11) and that the external diameter of the substantially cylindrical, cone-like end portion (20) of the second coupling element (2) is the same or slightly smaller than the internal diameter of the circular circumferential projection (12).

2. Compensating coupling according to claim 1, characterized in that the circular circumferential projection (12) has a rectangular cross-section.

3. Compensating coupling according to claim 1, characterized in that the circular circumferential projection (12) has a trapezoidal cross-section with a radially inwardly tapering width.

4. Compensating coupling according to one of the claims 1 to 3, characterized in that the circular circumferential projection (12) has a radially inwardly, convexly curved inner face.

5. Compensating coupling according to claim 4, characterized in that the axis (13') of the radial transverse bore (13) of the first coupling element (1) is located in the median plane of the circular circumferential projection (12).

6. Compensating coupling according to claim 5, characterized in that on the front face the transverse slit (21) is provided with a chamfer (21', 21").

7. Compensating coupling according to claim 6, characterized in that the cone-like end portion (20) is provided on its front face (22) with a central axial projection (23) which is also chamfered in the vicinity of the transverse slit (21).

8. Compensating coupling according to claim 6 or 7, characterized in that at the transition to the circumferential face (20') of the cone-like end portion (20), the transverse slit has flattened areas (24, 24'; 25, 25').

9. Compensating coupling according to one of the preceding claims, characterized in that in its central area the driving pin (30) is provided on remote sides with a flattening (31, 32), that each flattening (31, 32) passes at its axial ends and accompanied by the formation of a tilting face (33, 33'; 34, 34') into the unflattened, terminal, full diameter area, the tilting faces (33, 33'; 34, 34') having a common median plane in which the pin axis is located, that the axial spacing of two associated tilting faces (33, 33'; 34, 34') substantially corresponds to the external diameter of the cone-like end portion (20) or is slightly larger than the latter and that the width of the driving pin (30) in the vicinity of the flattenings (31, 32) substantially corresponds to or is slightly smaller than the inside width of the transverse slit (21) in the second coupling element (2).

10. Compensating coupling according to claim 9, characterized in that, when the compensating coupling is in the fitted state, the common median plane of the tilting faces (33, 33'; 34, 34') substantially coincides with the median plane of the circular circumferential projection (12).

11. Compensating coupling according to one of the preceding claims, characterized in that in the opening area of the axial bore (11) is provided a circular groove (14), in which an 0-ring is inserted as a sealing element.

12. Compensating coupling with a compensating shaft for compensating parallel and/or angular displacements of two coupled together shafts (40, 41), the compensating shaft being placed between the two coupled shafts (40, 41), characterized in that at the ends of the compensating shaft (7) is in each case provided a compensating coupling according to one of the claims 1 to 11.

13. Compensating coupling according to claim 12, characterized in that the axes (44', 45') of the driving pins (44, 45) associated with each compensating coupling are directed substantially parallel to one another.

## Revendications

1. Accouplement compensateur, comprenant un premier élément d'accouplement (1) et un deuxième élément d'accouplement (2), qui sont reliés l'un à l'autre par engagement positif et de manière solidaire en rotation, le premier élément d'accouplement (1) étant muni sur une face frontale (10) d'un perçage axial (11), qui s'ouvre en direction de cette face frontale (10) et présente un perçage transversal radial (13) au niveau du perçage axial (11), le deuxième élément d'accouplement (2) présentant une section d'extrémité (20) de type tenon pour l'essentiel cylindrique, qui s'engage dans le perçage axial (11) du premier élément d'accouplement (1), et un élément entraîneur (3) conformé en ergot d'entraînement (30) étant de plus prévu entre le premier élément d'entraînement (1) et le deuxième élément d'entraînement (2), élément entraîneur qui traverse le perçage transversal radial (13) et une fente transversale (21) radiale prévue dans la section d'extrémité de type tenon (20) du deuxième élément d'accouplement (2), ***caractérisé en ce qu'***à l'intérieur du perçage axial (11), il est prévu une saillie périphérique annulaire (12) en saillie vers l'intérieur dans le sens radial depuis la paroi de perçage (11'), saillie dont le diamètre intérieur est inférieur au diamètre intérieur du perçage axial (11), et ***en ce que*** le diamètre extérieur de la section d'extrémité de type tenon (20) pour l'essentiel cylindrique du deuxième élément d'accouplement (2) est égal ou légèrement inférieur au diamètre intérieur de la saillie périphérique annulaire (12).

2. Accouplement compensateur selon la Revendication 1, ***caractérisé en ce que*** la saillie périphérique annulaire (12) présente une section rectangulaire.

3. Accouplement compensateur selon la Revendication 1, ***caractérisé en ce que*** la saillie périphérique annulaire (12) présente une section trapézoïdale d'une largeur décroissante vers l'intérieur dans le sens radial.

4. Accouplement compensateur selon l'une des Revendications 1 à 3, ***caractérisé en ce que*** la saillie périphérique annulaire (12) présente une surface intérieure incurvée de manière convexe vers l'intérieur.

5. Accouplement compensateur selon la Revendication 4, ***caractérisé en ce que*** l'axe (13') du perçage transversal radial (13) du premier élément d'accouplement (1) se trouve dans le plan médian de la saillie périphérique annulaire (12).

6. Accouplement compensateur selon la Revendication 5, ***caractérisé en ce que*** la fente transversale (21) est prévue sur la face frontale d'un chanfrein (21, 21").

7. Accouplement compensateur selon la Revendication 6, ***caractérisé en ce que*** la section d'extrémité de type tenon (20) est munie sur sa face frontale (22) d'une saillie axiale (23) centrale, également chanfreinée au niveau de la fente transversale (21).

8. Accouplement compensateur selon la Revendication 6 ou 7, ***caractérisé en ce que*** la fente transversale présente, au niveau du raccordement avec la surface périphérique (20') de la section d'extrémité de type tenon (20), des zones aplaties (24, 24'; 25, 25').

9. Accouplement compensateur selon l'une quelconque des Revendications précédentes, ***caractérisé en ce que*** l'ergot d'entraînement (30) est muni dans sa zone médiane, sur des côtés opposés entre eux, à chaque fois d'un aplat (31, 32),
***en ce que*** chaque aplat (31, 32) se raccorde à chaque fois, au niveau de son extrémité axiale et en formant une surface de basculement (33, 33'; 34, 34'), à la zone d'extrémité, non aplatie, qui présente le diamètre complet, les surfaces de basculement (33, 33'; 34, 34') présentant un plan médian commun, dans lequel se trouve l'axe de l'ergot,
***en ce que*** la distance axiale de deux surfaces de basculement associées (33, 33'; 34, 34') correspond pour l'essentiel au diamètre extérieur de la section d'extrémité de type tenon (20) ou est légèrement plus grande qu'elle, et
***en ce que*** la largeur de l'ergot d'entraînement (30), au niveau des aplats (31, 32), correspond sensiblement à la largeur de passage de la fente transversale (21) située dans le deuxième élément d'accouplement (2), ou est légèrement plus faible.

10. Accouplement compensateur selon la Revendication 9, ***caractérisé en ce qu'***à l'état monté de l'accouplement compensateur, le plan médian commun des surfaces de basculement (33, 33'; 34, 34') coïncide pour l'essentiel avec le plan médian de la saillie périphérique annulaire (12).

11. Accouplement compensateur selon l'une quelconque des Revendications précédentes, ***caractérisé en ce que***, dans la zone du débouché du perçage axial (11), il est prévu une rainure annulaire (14), dans laquelle s'insère un joint torique servant d'élément d'étanchéité.

12. Accouplement compensateur, comprenant un arbre compensateur pour compenser des déplacements parallèles et/ou angulaires de deux arbres (40, 41) accouplés l'un à l'autre, l'arbre compensateur étant placé entre les deux arbres accouplés (40, 41), ***caractérisé en ce qu'***aux extrémités de l'arbre compensateur (7), est placé à chaque fois un accouplement compensateur selon l'une des Revendications 1 à 11.

13. Accouplement compensateur selon la Revendication 12, ***caractérisé en ce que*** les axes (44', 45') des ergots d'entraînement (44, 45) associés à chaque accouplement compensateur sont sensiblement orientés parallèles l'un à l'autre.
